# EUROPÄISCHE PATENTSCHRIFT

(11) **EP 3 964 446 B1**
(45) Veröffentlichungstag und Bekanntmachung des Hinweises auf die Patenterteilung: **06.11.2024**
(21) Anmeldenummer: 21194628.0
(22) Anmeldetag: 02.09.2021
(51) Int. Cl.: B65B 9/12, A22C 11/10, B65B 59/00, B65B 3/08, B65B 7/12

(54) **VERFAHREN SOWIE VORRICHTUNG ZUM ABDREHEN VON SCHLAUCHFÖRMIGEN HÜLLEN UND BETREFFENDES SYSTEM ZUM BEFÜLLEN SCHLAUCHFÖRMIGER HÜLLEN**
METHOD AND DEVICE FOR TWISTING TUBULAR CASINGS AND RELATED SYSTEM FOR FILLING TUBULAR CASINGS
PROCÉDÉ, AINSI QUE DISPOSITIF PERMETTANT DE TOURNER LES MANCHONS TUBULAIRES ET SYSTÈME CORRESPONDANT DE REMPLISSAGE DES MANCHONS TUBULAIRES

(30) Priorität: 04.09.2020 DE 102020123206
(43) Veröffentlichungstag der Anmeldung: 09.03.2022
(73) Patentinhaber: VEMAG Maschinenbau GmbH, 27283 Verden/Aller (DE)
(72) Erfinder: Matthies, Heiner, 27283 Verden (DE); Zarezki, Thomas, 27283 Verden (DE)
(74) Vertreter: Eisenführ Speiser

(56) Entgegenhaltungen:
- EP-A1- 1 582 098
- EP-A2- 0 395 177
- DD-A7- 295 964
- US-A- 5 951 391

## Beschreibung

Die Erfindung betrifft ein Verfahren zum Abdrehen von schlauchförmigen Hüllen. Die Erfindung betrifft weiterhin eine Vorrichtung zum Abdrehen von schlauchförmigen Hüllen sowie ein betreffendes System zum Befüllen schlauchförmigen Hüllen.

Bei bekannten Verfahren und Vorrichtungen zur Herstellung von Würstchen werden mithilfe einer Abdrehvorrichtung Kunst- oder Naturdärme mit Fleischbrät befüllt und portioniert; auf gleiche Weise werden auch andere Lebensmittelmassen in eine Hülle gefüllt. Die Lebensmittelmasse wird regelmäßig in einer Füllmaschine bereitgestellt. Bei bekannten Verfahren wird mittels einer Abdrehvorrichtung und einer Portioniervorrichtung eine Abdrehstelle in der Darmhülle erzeugt, die einzelne Portionen von Würstchen voneinander trennt.

Derartige Portioniervorrichtungen werden häufig als Längenportioniergerät bezeichnet, wobei Portionen der Würstchen mit insbesondere gleichen Längen erzeugt werden. Ein Beispiel eines solchen Längenportioniergeräts besteht im Wesentlichen aus zwei voneinander beabstandeten, umlaufenden Ketten oder Bändern, die abschnittsweise in einem Transportbereich mit gleicher Geschwindigkeit in eine Transportrichtung nebeneinander laufen und in einem zwischen den beiden Ketten und Bändern ausgebildeten Zwischenraum dem befüllten Darm führen.

In Abständen von etwa der Länge eines Würstchens weisen die Ketten oder Bänder daran befestigte, seitlich abstehende Abteiler auf, welche die befüllte Darm-Hülle einschnüren an einer Eingriffsstelle oder Einschnürstelle. Aufgrund einer Rotationsbewegung der gefüllten Hülle um deren Längsachse und in Zusammenschau mit dem Eingriff der Abteiler an der Eingriffsstelle wird die Rotation der Hülle im Bereich der Eingriffsstelle verringert, und es bildet sich eine Abdrehstelle aus. Durch Erzeugen einer weiteren Abdrehstelle an einem anderen Ort im weiteren Verlauf des Prozesses entstehen so Portionen und somit abgrenzbare Würstchen.

Die Anzahl der Abdrehungen ist bei aus dem Stand der Technik vorbekannten Abdrehvorrichtungen fest einstellbar. Dieser Parameter stellt typischerweise einen Kompromiss dar zwischen der Schaffung haltbarer Abdrehungen auf der einen Seite und einem möglichst geringen Darmverbrauch auf der anderen Seite. Der Darmverbrauch korreliert zumeist unmittelbar mit der gewählten Anzahl an Abdrehungen.

EP 0 395 177 A2 betrifft eine Vorrichtung zur Herstellung von Würstchen. EP 1 582 098 A1 offenbart eine Vorrichtung und ein Verfahren zum Abteilen eines Wurststrangs. US 5,951,391 A betrifft ein Verfahren und eine Vorrichtung zum Abdrehen von Würstchen. DD 295 964 A7 betrifft eine Vorrichtung zum Abdrehen einer in eine Hülle portionierten pastenförmigen Masse, insbesondere Wurstmasse.

Nachteilig bei diesem aus dem Stand der Technik bekannten Vorgehen wirkt sich aus, dass je nach Auswahl der Anzahl der Abdrehungen entweder ein hoher Darmverbrauch besteht oder aber insbesondere bei den ersten und letzten Abdrehungen bei Verarbeitung einer schlauchförmigen Hülle eine erhöhte Wahrscheinlichkeit besteht, dass die Abdrehstellen nicht die erforderliche Haltbarkeit aufweisen.

Vor diesem Hintergrund lag der Erfindung die Aufgabe zugrunde, ein Verfahren und eine Vorrichtung der eingangs bezeichneten Art dahingehend weiterzubilden, dass die im Stand der Technik aufgefundenen Nachteile möglichst weitgehend behoben werden. Insbesondere war ein Verfahren und eine Vorrichtung anzugeben, welche(s) den Darmverbrauch reduziert und gleichzeitig Abdrehungen mit hoher Haltbarkeit bereitstellt. Erfindungsgemäß wird die Aufgabe bei einem Verfahren der eingangs genannten Art durch die technischen Merkmale des unabhängigen Anspruchs 1.

Die Erfindung macht sich der Erkenntnis zunutze, dass eine Darmersparnis dadurch erreicht werden kann, dass die Anzahl Abdrehungen während der Verarbeitung einer einzigen schlauchförmigen Hülle nicht wie aus dem Stand der Technik bekannt auf einen konstanten Wert eingestellt wird, sondern vielmehr während der Verarbeitung einer einzigen Hülle, umfassend eine Vielzahl von Portionen mit einer Vielzahl von Abdreh stellen,variiert wird. Insbesondere hat sich gezeigt, dass zur Erzielung haltbarer Abdrehungen bei der Verarbeitung einer schlauchförmigen Hülle unterschiedliche Abdrehungsanzahlen in Abhängigkeit von der jeweils verarbeiteten Portion vorteilhaft sind. Beispielsweise hat sich gezeigt, dass bei einigen schlauchförmigen Hüllen am Anfang und am Ende eines Wurststranges weniger haltbare Abdrehungen entstehen, wo hingegen inmitten des Wurtstranges keine Haltbarkeitsprobleme bei derselben Abdrehungsanzahl auftreten.

Durch eine Variation der Anzahl der Abdrehungen während der Verarbeitung einer einzigen Hülle lässt sich nun dieser Erkenntnis Rechnung tragen und die Anzahl der Abdrehungen selektiv, beispielsweise am Anfang und am Ende eines aus der schlauchförmigen Hülle entstehenden Wurststranges erhöhen, wohingegen inmitten des Stranges eine geringere Abdrehungsanzahl zur Herstellung einer ausreichenden Festigkeit ausreichend ist.

Da die Anzahl der Abdrehungen direkt korrespondiert mit dem Materialverbrauch, insbesondere dem Darmverbrauch, lässt sich durch die Variation der Anzahl der Abdrehungen während der Verarbeitung einer einzigen schlauchförmigen Hülle Material, insbesondere Darmmaterial, einsparen. Diese Einsparung kann gegenüber einer konstanten Anzahl von Abdrehungen, wie aus dem Stand der Technik bekannt, etwa 3% und mehr, je nach herzustellender Portion, betragen.

Die Erfindung betrifft auch das Bereitstellen einer Vorrichtung, insbesondere einer Abdrehvorrichtung, welche dazu eingerichtet ist, die schlauchförmigen Hüllen zur Ausbildung von Portionen, insbesondere Würstchen, mit einer variablen Anzahl von Abdrehungen je Portion oder je Gruppe von Portionen abzudrehen, wobei die Vorrichtung eine Steuerungseinrichtung aufweist, die dazu eingerichtet ist, das Verfahren nach einem der Ansprüche 1 bis 7 auszuführen.

Die Erfindung wird dadurch weitergebildet, dass die Anzahl der Abdrehungen je Portion in einem Bereich von 0,5 Abdrehungen bis 15 Abdrehungen, insbesondere 1,5 Abdrehungen bis 2,5 Abdrehungen variiert wird. Der betreffende Wertebereich hat sich als besonders geeignet herausgestellt zur Herstellung von haltbaren Abdrehungen in Abhängigkeit von der jeweils verarbeiteten d. h. abgedrehten Portion. Beispielsweise kann zur Herstellung der ersten und letzten Portionen aus einer schlauchförmigen Hülle eine höhere Anzahl von Abdrehungen, etwa 2,5 Abdrehungen, gewählt werden, und für jene Portionen inmitten des Stranges können 1,5 Abdrehungen ausreichend und materialsparend sein.

Erfindungsgemäß wird die Anzahl der Abdrehungen derart variiert, dass eine erste Sequenz von Abdrehvorgängen mit einer ersten Anzahl von Abdrehungen erfolgt und eine zweite Sequenz von Abdrehvorgängen mit einer zweiten Anzahl von Abdrehungen. Eine derartige Variation der Anzahl von Abdrehungen hat sich als besonders geeignet erwiesen zur darmsparenden Verarbeitung von schlauchförmigen Hüllen. Die erste Sequenz enthält eine höhere Zahl an Abdrehungen als die zweite Sequenz. Somit kann die erste Sequenz zum Anfang der Verarbeitung einer schlauchförmigen Hülle und etwa auch zum Ende der Verarbeitung verwendet werden, um sicherzustellen, dass die Abdrehungen in diesen Bereichen die erforderliche Haltbarkeit aufweisen. In dem übrigen Bereich kann eine geringere Anzahl von Abdrehungen ausreichend sein, um eine ausreichende Festigkeit und Haltbarkeit der Abdrehungen zu erreichen, wobei hierdurch Darmmaterial eingespart werden kann.

Erfindungsgemäß läuft unmittelbar nach Beginn der Verarbeitung einer schlauchförmigen Hülle die erst Sequenz ab und anschließend die zweite Sequenz. Auf diese Weise kann unterschiedlichen Anforderungen an die Anzahl der Abdrehungen zur Erreichung einer haltbaren Abdrehung in Abhängigkeit von dem Verarbeitungsgrad in Bezug auf die Portionen der schlauchförmigen Hülle Rechnung getragen werden.

Erfindungsgemäß läuft am Ende der Verarbeitung einer schlauchförmigen Hülle erneut die erste Sequenz ab oder eine oder mehrere weitere Sequenzen mit jeweils einer bestimmten Anzahl von Abdrehungen je weiterer Sequenz. Hierdurch wird dem Umstand Rechnung getragen, dass auch am Ende der Verarbeitung einer schlauchförmigen Hülle eine angepasste Anzahl an Abdrehungen vorteilhaft sein kann.

Die Erfindung wird dadurch weitergebildet, dass die Anzahl der Abdrehungen in der ersten Sequenz 0,5 Abdrehungen bis 15 Abdrehungen beträgt, insbesondere 1,5 bis 3,5 Abdrehungen. Die betreffende Anzahl an Abdrehungen hat sich insbesondere für Anwendungsbereiche als vorzugswürdig erwiesen, bei denen erhöhte Anforderungen an die Haltbarkeit der Abdrehungen gestellt werden oder bei denen aufgrund des Verarbeitungsgrades, etwa am Ende und am Anfang der Verarbeitung einer schlauchförmigen Hülle, eine erhöhte Anzahl an Abdrehungen vorteilhaft ist.

Vorzugsweise beträgt die Anzahl der Abdrehungen in der zweiten Sequenz 0,5 Abdrehungen bis 15 Abdrehungen, insbesondere 1,5 bis 3,5 Abdrehungen. Der betreffende Bereich ist insbesondere dann zielführend, wenn mittels der beschriebenen Anzahl an Abdrehungen eine hinreichende Haltbarkeit der Abdrehung erreicht werden kann, wobei gleichzeitig gegenüber der Anzahl der Abdrehungen in der ersten Sequenz Darmmaterial eingespart werden kann.

Gemäß einer bevorzugten Weiterbildung läuft bezogen auf die Gesamtzahl der Portionen, die aus einer schlauchförmigen Hülle erhalten werden können, die erste Sequenz bei der Verarbeitung der ersten und/oder letzten 1% bis 15%, insbesondere 5% der Portionen ab. Der betreffende Bereich hat sich als besonders geeignet dazu erwiesen, die Anzahl der Abrehungen zu variieren, insbesondere zu erhöhen, um die Haltbarkeit der Abdrehungen zielführend zu erhöhen.

Gemäß einer alternativen bevorzugten Ausführungsform läuft die erste Sequenz bei den ersten und/oder letzten 5 bis 15, insbesondere 10 Portionen ab. Je nach Art der zu befüllenden schlauchförmigen Hülle kann alternativ eine Anpassung der Anzahl der Abdrehvorgänge auch auf einen absoluten Wertebereich bezogen sein, etwa 5 bis 15, insbesondere 10 Abrehvorgänge.

Gemäß einer alternativ bevorzugten Ausführungsform läuft unmittelbar nach Beginn der Verarbeitung einer schlauchförmigen Hülle die zweite Sequenz ab und anschließend die erste Sequenz. Vorzugsweise läuft am Ende der Verarbeitung einer schlauchförmigen Hülle erneut die zweite Sequenz ab. Gemäß diesem alternativen Ausführungsbeispiel wird die Anzahl der Abdrehungen zum Anfang der Verarbeitung einer schlauchförmigen Hülle sowie zum Ende reduziert, und in dem dazwischenliegenden Bereich erhöht. Ein solcher Verfahrensablauf kann für einzelne Anwendungsfälle vorteilhaft sein.

Gemäß einer weiteren alternativ bevorzugten Ausführungsform laufen die erste Sequenz und die zweite Sequenz abwechselnd ab, insbesondere sich mehrfach abwechselnd. Es hat sich herausgestellt, dass ein solcher abwechselnder Ablauf, insbesondere ein sich mehrfach abwechselnder Ablauf, für einige Anwendungsfälle vorteilhaft ist.

Gemäß einer bevorzugten Ausführungsform ist zwischen zwei Sequenzen ein Übergangsbereich angeordnet, in dem die Anzahl der Abdrehungen linear oder nicht linear von der Anzahl der Abdrehungen in der ersten an den Übergangsbereich angrenzenden Sequenz auf die Anzahl der Abdrehungen in der zweiten an den Übergangsbereich angrenzenden Sequenz übergeht. Insoweit kann durch die betreffenden Verfahrensmerkmale erreicht werden, dass kein abrupter Sprung von der Anzahl der Abdrehungen einer ersten Sequenz zu einer benachbarten Sequenz erfolgt, sondern insbesondere ein Übergang. Dieser Übergang kann linear oder nicht linear ausgebildet sein und eine variable Anzahl von Abdrehvorgängen betreffen. Beispielsweise kann sich der Übergangsbereich auf eine ganzzahlige Anzahl von Abdrehvorgängen erstrecken, etwa 5 Abdrehvorgänge, oder auch einen prozentualen Wert bezogen auf die Gesamtanzahl der Abdrehvorgänge, etwa 2% der Abdrehvorgänge.

Das Verfahren wird durch den Schritt weitergebildet: Definition einer Abfolge der Abdrehsequenzen und/oder der Anzahl der Abdrehungen innerhalb der Sequenzen mittels einer Benutzerschnittstelle.

Gemäß einer alternativen Ausführungsform weist das Verfahren die Schritte auf: Definition einer Anzahl von Abdrehungen; Definition einer Anzahl von Zusatzabdrehungen; Definition, für welche Anzahl von Abdrehvorgängen zu Beginn der Verarbeitung einer schlauchförmigen Hülle die Zusatzabdrehungen vorgenommen werden sollen; Definition, für welche Anzahl von Abdrehvorgängen zum Ende der Verarbeitung einer schlauchförmigen Hülle die Zusatzabdrehungen vorgenommen werden sollen; Durchführung der Abdrehungen entsprechend der definierten Parameter.

Die Erfindung ist vorstehend unter Bezugnahme auf ein Verfahren zum Abdrehen von schlauchförmigen Hüllen beschrieben worden. In einem weiteren Aspekt betrifft die Erfindung eine Vorrichtung zum Abdrehen von schlauchförmigen Hüllen, welche dazu eingerichtet ist, die schlauchförmigen Hüllen zur Ausbildung von Portionen, insbesondere Würstchen, mit einer variablen Anzahl von Abdrehungen je Portionen oder je Gruppe von Portionen abzudrehen, wobei die Vorrichtung eine Steuerungseinrichtung aufweist.

Die Erfindung löst die eingangs bezeichnete Aufgabe in Bezug auf die Vorrichtung zum Abdrehen von schlauchförmigen Hüllen, in dem die Steuerungseinrichtung dazu ausgebildet und eingerichtet ist, das Verfahren nach einem der obenstehenden Ausführungsbeispiele auszuführen. Die Vorrichtung zum Abdrehen von schlauchförmigen Hüllen macht sich die gleichen Vorteile und bevorzugten Ausführungsformen zunutze, wie das erfindungsgemäße Verfahren. Diesbezüglich wird auf die obigen Ausführungen verwiesen und deren Inhalt hier mit einbezogen.

In einem weiteren Aspekt wird die der Erfindung zugrundeliegende Aufgabe durch ein System zum Befüllen schlauchförmigen Hüllen, mit einer Füllmaschine zum Bereitstellen einer pastösen Masse, einer Vorrichtung zum Abdrehen der gefüllten schlauchförmigen Hüllen, und einer Portioniervorrichtung zur Ausbildung von Würstchen-Portionen gelöst, wobei die Vorrichtung zum Abdrehen nach dem vorstehenden Ausführungsbeispiel ausgebildet ist. Das System macht sich die gleichen Vorteile und bevorzugten Ausführungsformen zunutze, wie die erfindungsgemäße Vorrichtung zum Abdrehen von schlauchförmigen Hüllen und das erfindungsgemäße Verfahren. Diesbezüglich wird auf die obigen Ausführungen verwiesen und deren Inhalt hier mit einbezogen.

Die Erfindung wird nachfolgend anhand bevorzugter Ausführungsbeispiele unter Bezugnahme der beigefügten Figuren näher beschrieben. Hierbei zeigen:
- - Fig. 1:: ein Ausführungsbeispiel eines erfindungsgemäßen Systems zum Befüllen schlauchförmiger Hüllen in einer perspektivischen Darstellung;
- - Fig. 2:: das Ausführungsbeispiel des erfindungsgemäßen Systems gemäß Figur 1 in einer Draufsicht;
- - Fig. 3:: eine Detailansicht der Portioniervorrichtung des erfindungsgemäßen Systems gemäß den Figuren 1 und 2 in einer Draufsicht; und
- - Fig. 4 bis Fig. 9:: unterschiedliche Sequenzabfolgen des erfindungsgemäßen Verfahrens zum Abdrehen schlauchförmiger Hüllen in Diagrammdarstellungen.

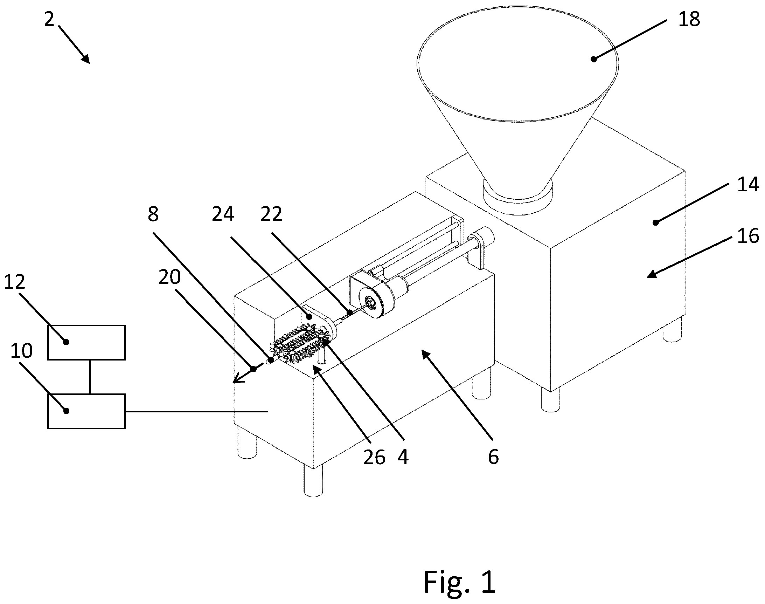

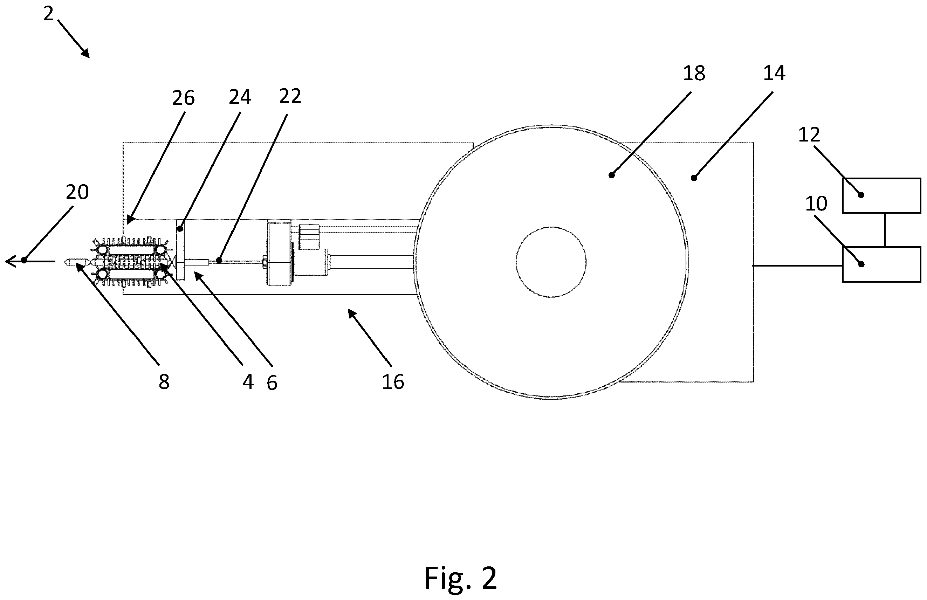

Die Figuren 1 sowie 2 zeigen ein System 2 zum Herstellen von Portionen aus einer mit Lebensmittel-Masse gefüllten schlauchförmigen Hülle 4, welche eine Füllmaschine 14 mit einem Fülltrichter 18 zum Aufnehmen der Lebensmittel-Masse und mit einer Förderpumpe 16, eine Abdrehvorrichtung 6 mit einem Füllrohr 22 zum Einfüllen der Lebensmittel-Masse in die zu füllende schlauchförmige Hülle 4 und eine Portioniervorrichtung 26 aufweist.

Das Füllrohr 22 ist um seine Längsachse rotierend antreibbar. Die Abdrehvorrichtung 6 weist ferner eine Darmbremse 24 auf, welche einen Darmbremsring (nicht gezeigt) aufweist, welcher synchron zu dem Füllrohr 22 rotier- und antreibbar ist. Das Füllrohr 22 endet im Bereich des Darmbremsrings. Im Betrieb wird eine pastöse Lebensmittel-Masse, wie insbesondere Wurstbrät, in die zu befüllende schlauchförmige Hülle 4 abgegeben und von der Portioniervorrichtung 26 weiterverarbeitet. Mittels der Abdrehvorrichtung 6 und der Portioniervorrichtung 26 werden einzelne Portionen, insbesondere längenportionierte einzelne Würstchenportionen 8 oder ähnliche Lebensmittelprodukte erzeugt.

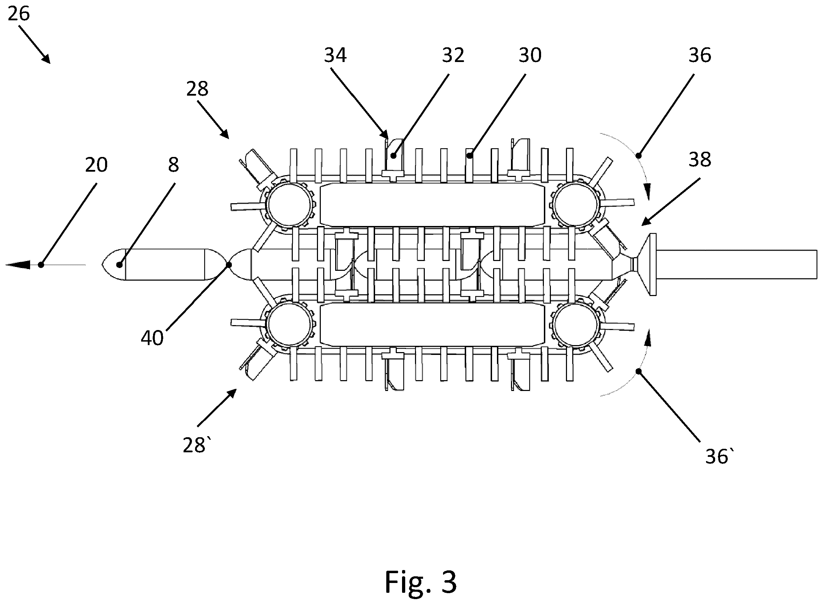

Die Portioniervorrichtung 26 weist Abteiler 32 (nicht gezeigt, vgl. Fig. 3) auf, welche die befüllte schlauchförmige Hülle 4 einschnüren. Aufgrund der Rotation der gefüllten schlauchförmigen Hülle 4 um deren Längsachse und dem Eingriff der Abteiler 32 wird die Rotation im Bereich einer Eingriffsstelle verringert, und es bildet sich eine Abdrehstelle 40 aus. Erneut wird hinsichtlich einer detaillierten Darstellung auf Fig. 3 verwiesen.

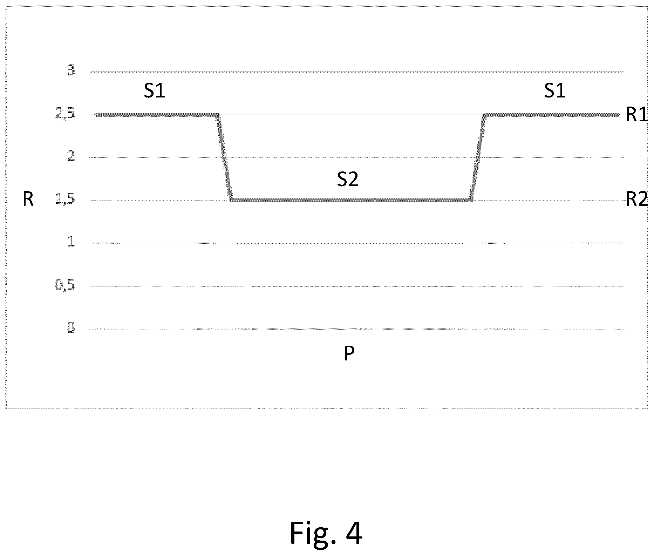

Das System 2 weist ferner eine Steuerungseinrichtung 10 auf, die mit einer Benutzerschnittstelle 12 datenleitend verbunden ist. Die Abdrehvorrichtung 6 ist dazu eingerichtet, die schlauchförmigen Hüllen 4 zur Ausbildung von Portionen P, insbesondere Würstchen 8, mit einer variablen Anzahl von Abdrehungen R je Portion P abzudrehen. Die Merkmale des erfindungsgemäßen Verfahrens sind anhand der Figuren 4 bis 7 veranschaulicht. Die Steuerungseinrichtung 10 ist dazu eingerichtet, die nachfolgend beschriebenen Verfahrensmerkmale auszuführen.

Die in Figur 3 gezeigte Portioniervorrichtung 26 umfasst zwei Transportbänder 28, 28' mit einer Vielzahl darauf montierter Führungselementen 30 und einiger auf dem Transportband 28, 28' montierter Abteiler 32. Die Transportbänder 28, 28' sind aus einem flexiblem Material oder alternativ als Kette ausgebildet und bewegen sich synchron in Richtung der Pfeile 36, 36'. Die Würstchenportionen 8 werden in Richtung einer Transportrichtung 20 transportiert.

Die Führungselemente 30 stehen seitlich von den Transportbändern 28, 28' ab und weisen eine vorzugsweise halbkreisförmige Ausnehmung 34 auf, die an die im Wesentlichen zylindrische Kontur der Würstchenportionen 8 angepasst ist, sodass die sich bildenden Portionen 8 getragen und geführt werden. Durch den Kontakt der Führungselemente 30 mit der schlauchförmigen Hülle 4 wird die schlauchförmige Hülle 4 hinsichtlich einer Rotation gebremst.

In bestimmten Abständen zueinander, welche in etwa der Länge einer Würstchenportion 8 entsprechen, sind die seitlich von den Transportbändern abstehenden Abteiler 32 so angeordnet, dass immer zwei synchron angetriebene sich im Wesentlichen gegenüberliegende Abteiler 32 so zusammenwirken können, dass sie im Umlenkbereich 38 sich in Richtung auf den die gefüllte schlauchförmige Hülle 4 bewegen und mit dieser in Kontakt kommen und eine Einschnürstelle und eine Abdrehstelle 40 ausbilden bzw. beginnen auszubilden.

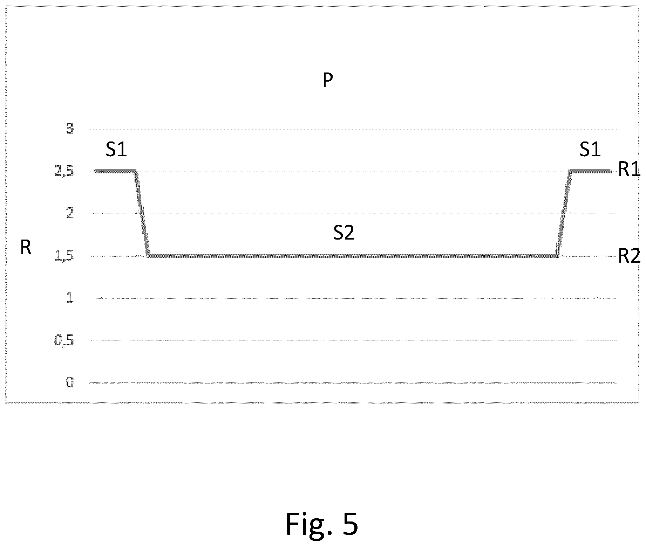

Wie aus den Figuren 4 sowie 5 zu entnehmen ist, ist die Vorrichtung so ausgebildet und eingerichtet und wird so betrieben, dass das Abdrehen der schlauchförmigen Hülle 4 derart erfolgt, dass die Anzahl der Abdrehungen R je Portion P oder je Gruppe von Portionen P während der Verarbeitung einer schlauchförmigen Hülle 4 variiert wird. Die Anzahl der Abdrehungen R je Portion P oder je Gruppe von Portionen P ist auf der vertikal verlaufenden Achse abgetragen. Auf der horizontalen Achse sind die einzelnen Portionen P, die sich aus einer schlauchförmigen Hülle 4 ausbilden lassen, aufgetragen. Wie beispielsweise aus Figur 4 zu erkennen ist, variiert die Anzahl der Abdrehungen R in Bezug auf die aus einer Hülle 4 generierbaren Portionen P. Die Anzahl der Abdrehungen R je Portion oder je Gruppe von Portionen P liegt ausweislich Figur 4 in einem Bereich von 1,5 Abdrehungen bis 2,5 Abdrehungen, ist auf diesen Zahlenbereich jedoch nicht beschränkt und kann typischerweise in einem Bereich von 0,5 Abdrehungen bis 15 Abdrehungen liegen. Die Anzahl der Abdrehungen R je Portion P oder je Gruppe von Portionen P wird derart variiert, dass eine erste Sequenz von Abdrehvorgängen S1 mit einer ersten Anzahl von Abdrehungen R1 erfolgt und eine zweite Sequenz von Abdrehvorgängen S2 mit einer zweiten Anzahl von Abdrehungen R2. Die Anzahl der Portionen P je Sequenz S ist variabel. Unmittelbar nach Beginn der Verarbeitung einer schlauchförmigen Hülle 4 läuft die erste Sequenz S1 ab. Nach Beendigung der Sequenz S1 läuft die Sequenz S2 ab und anschließend erneut die Sequenz S1. Dabei beträgt die Anzahl der Abdrehungen R1 in der ersten Sequenz S1 2,5 und in der zweiten Sequenz S2 1,5.

Wie in Bezug auf Figur 5 dargestellt ist, läuft die erste Sequenz S1 bezogen auf die Gesamtzahl der Portionen P bei der Verarbeitung der ersten etwa 5% und letzten etwa 5% der Portionen P einer schlauchförmigen Hülle 4 ab. Wie in Figur 4 dargestellt ist, kann dieser Anteil auch signifikant größer sein, etwa im Bereich von jeweils 25% liegen. Darüber hinaus kann eine absolute Anzahl an Portionen P festgelegt sein, für welche die erste Sequenz S1 abläuft. Beispielsweise kann die erste Sequenz S1 bei den ersten und letzten 5 bis 15 Portionen P ablaufen, insbesondere bei den ersten und letzten 10 Portionen P.

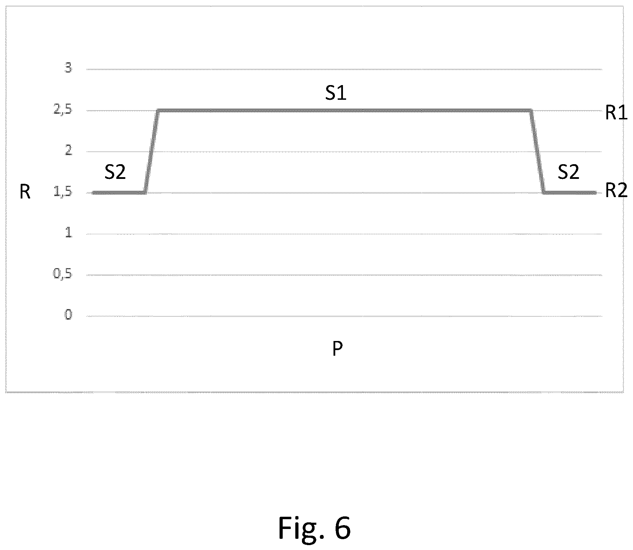

Ein alternatives Verfahren ist in Figur 6 gezeigt. Demnach läuft unmittelbar nach Beginn der Verarbeitung einer schlauchförmigen Hülle 4 die zweite Sequenz S2 ab, anschließend die erste Sequenz S1 und daraufhin die zweite Sequenz S2. Mit anderen Worten werden die ersten Portionen P einer schlauchförmigen Hülle 4 zunächst mit 1,5 Umdrehungen abgedreht, die darauffolgenden Portionen P mit 2,5 Abdrehungen und die letzten Portionen P der Hülle 4 mit 1,5 Abdrehungen.

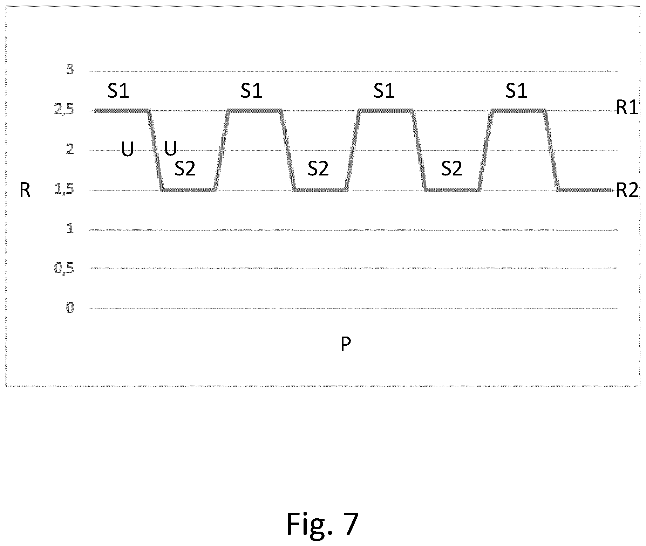

Ein weiterer alternativer Verfahrensablauf ist in Figur 7 gezeigt. Ausweislich Figur 7 laufen die erste Sequenz S1 und die zweite Sequenz S2 abwechselnd ab, insbesondere mehrfach abwechselnd. Mit anderen Worten erfolgt zu Beginn der Verarbeitung einer schlauchförmigen Hülle 4 zunächst ausweislich der Sequenz S1 eine Abdrehung mit 2,5 Umdrehungen, sodann ausweislich der Sequenz S2 eine Abdrehung mit 1,5 Umdrehungen, anschließend wieder eine Abdrehung mit 2,5 Umdrehungen usw.

Anhand von Figur 7 ist darüber hinaus veranschaulicht, dass zwischen zwei Sequenzen S1, S2 jeweils ein Übergangsbereich U angeordnet sein kann, in welchem die Anzahl der Abdrehungen R linear oder nicht-linear von der Anzahl der Abdrehungen R1, R2 in der ersten an den Übergangsbereich angrenzenden Sequenz S1, S2 auf die Anzahl der Abdrehungen R1, R2 in der zweiten an den Übergangsbereich U angrenzenden Sequenz S1, S2 übergeht. Unter Bezugnahme auf Figur 7 erfolgt nach dem Abdrehen einer letzten Portion P in der links dargestellten Sequenz S1 kein abrupter Übergang auf die Sequenz S2, sondern eine zwischen den Sequenzen S1 und S2 liegende Portion P wird beispielsweise mit zwei Abdrehungen abgedreht. Der Übergangsbereich U kann eine Portion P umfassen oder auch mehrere Portionen P.

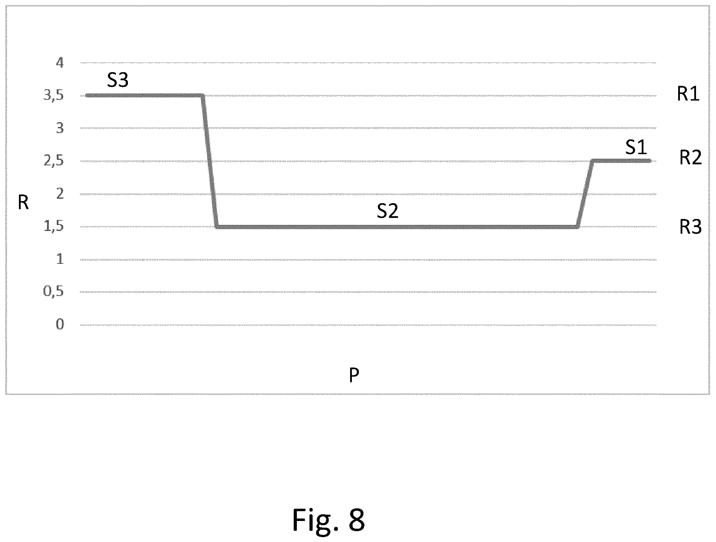

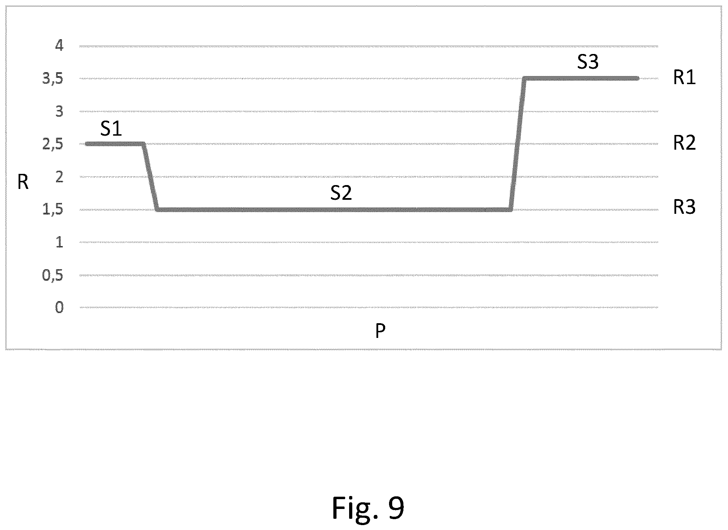

Ein weiterer alternativer Verfahrensablauf ist in Figur 8 gezeigt. Ausweislich Figur 8 läuft bei der Verarbeitung einer schlauchförmigen Hülle, zunächst eine Sequenz S3 für mehrere Portionen P mit 3,5 Abdrehungen R1 ab, sodann eine Sequenz S2 mit 1,5 Abdrehungen R3 und abschließend eine Sequenz S1 mit 2,5 Abdrehungen R2. Darüber hinaus können die Sequenzen S1 bis S3 gemäß einem alternativen Verfahrensablauf auch in umgekehrter Reihenfolge ablaufen, wie in Fig. 9 gezeigt. Es kann weiterhin bei der Verarbeitung einer schlauchförmigen Hülle eine Gruppe oder mehrere Gruppen von Portionen mit einer alternativen Anzahl an Abdrehungen R innerhalb einer oder mehrere weiterer Sequenzen S abgedreht werden (nicht gezeigt). Ferner kann beispielsweise auch die Anzahl der Portionen P je Sequenz variiert werden.

Die Abfolge der Abdrehsequenzen S1, S2, sowie S3 und weiterer Sequenzen S, die Eigenschaften der Übergangsbereiche U und/oder der Anzahl der Abdrehungen R1, R2, R3 und weiterer Anzahlen an Abdrehungen R innerhalb der Sequenzen S1, S2, S3, S und die Anzahl der Portionen P je Sequenz S1, S2, S3, S können auf vielfältige Weise definiert werden mittels der in den Figuren 1 und 2 gezeigten Benutzerschnittstelle 12 oder hinterlegt sein in der Steuerungseinrichtung 10. Die Benutzerschnittstelle 12 ist datenleitend mit der Steuerungseinrichtung 10 verbunden. Die Steuerungseinrichtung 10 führt das erfindungsgemäße Verfahren aus, zusammen mit der Abdrehvorrichtung 6 und der Portioniervorrichtung 26.

### Bezugszeichenliste

- 2: Befüllsystem
- 4: Schlauchförmige Hülle
- 6: Abdrehvorrichtung
- 8: Würstchenportion
- 10: Steuerungseinrichtung
- 12: Benutzerschnittstelle
- 14: Füllmaschine
- 16: Förderpumpe
- 18: Fülltrichter
- 20: Transportrichtung
- 22: Füllrohr
- 24: Darmbremse
- 26: Portioniervorrichtung
- 28, 28': Transportband
- 30: Führungselement
- 32: Abteiler
- 34: Ausnehmung
- 36, 36': Abteiler-Bewegungsrichtung
- 38: Umlenkbereich
- 40: Einschnürstelle / Abdrehstelle
- R: Anzahl von Abdrehungen
- R1: Erste Anzahl von Abdrehungen
- R2: Zweite Anzahl von Abdrehungen
- R3: Dritte Anzahl von Abdrehungen
- R: Anzahl von Abdrehungen
- S1: Erste Sequenz
- S2: Zweite Sequenz
- S3: Dritte Sequenz
- S: Weitere Sequenz oder weitere Sequenzen
- P: Portion
- U: Übergangsbereich

## Patentansprüche

1. Verfahren zum Abdrehen von schlauchförmigen Hüllen (4), mit dem Schritt:
- Abdrehen einer schlauchförmigen Hülle (4) derart, dass die Anzahl der Abdrehungen (R) je Gruppe von Portionen (P) während der Verarbeitung einer schlauchförmigen Hülle (4) variiert wird,
wobei die Anzahl der Abdrehungen (R) je Gruppe von Portionen (P) derart variiert wird, dass eine erste Sequenz von Abdrehvorgängen (S1) mit einer ersten Anzahl von Abdrehungen (R1) erfolgt und eine zweite Sequenz von Abdrehvorgängen (S2) mit einer zweiten Anzahl von Abdrehungen (R2),
**dadurch gekennzeichnet, dass** unmittelbar nach Beginn der Verarbeitung einer schlauchförmigen Hülle (4) die erste Sequenz (S1) abläuft, anschließend die zweite Sequenz (S2) und zum Ende der Verarbeitung einer schlauchförmigen Hülle (4) erneut die erste Sequenz (S1) abläuft,
wobei die erste Sequenz (S1) eine höhere Anzahl an Abdrehungen enthält als die zweite Sequenz (S2).

2. Verfahren nach Anspruch 1,
**dadurch gekennzeichnet, dass** die Anzahl der Abdrehungen (R1) in der ersten Sequenz (S1) 0,5 Abdrehungen bis 15 Abdrehungen beträgt, insbesondere 1,5 bis 3,5 Abdrehungen.

3. Verfahren nach einem der vorstehenden Ansprüche,
**dadurch gekennzeichnet, dass** die Anzahl der Abdrehungen (R2) in der zweiten Sequenz (S2) 0,5 Abdrehungen bis 15 Abdrehungen beträgt, insbesondere 1,5 bis 3,5 Abdrehungen.

4. Verfahren nach einem der vorstehenden Ansprüche,
**dadurch gekennzeichnet, dass** bezogen auf die Gesamtzahl der Portionen (P) einer schlauchförmigen Hülle (4) die erste Sequenz (S1) bei der Verarbeitung der ersten und/oder letzten 1 % bis 15 %, insbesondere 5 % der Portionen (P) abläuft.

5. Verfahren nach einem der vorstehenden Ansprüche,
**dadurch gekennzeichnet, dass** die erste Sequenz bei den ersten und/oder letzten 5 bis 15, insbesondere 10 Portionen (P) abläuft.

6. Verfahren nach einem der vorstehenden Ansprüche,
**dadurch gekennzeichnet, dass** zwischen zwei Sequenzen (S1, S2) ein Übergangsbereich (U) angeordnet ist, in dem die Anzahl der Abdrehungen (R) linear oder nichtlinear von der Anzahl der Abdrehungen (R1, R2) in der ersten an den Übergangsbereich (U) angrenzenden Sequenz (S1, S2) auf die Anzahl der Abdrehungen (R1, R2) in der zweiten an den Übergangsbereich (U) angrenzenden Sequenz (S1, S2) übergeht.

7. Verfahren nach einem der vorstehenden Ansprüche, wobei das Verfahren den Schritt aufweist:
- Definition einer Abfolge der Abdrehsequenzen (S1, S2) und/oder der Anzahl der Abdrehungen (R1, R2) innerhalb der Sequenzen (S1, S2) mittels eine Benutzerschnittstelle (12).

8. Vorrichtung (6) zum Abdrehen von schlauchförmigen Hüllen (4), welche dazu eingerichtet ist, die schlauchförmigen Hüllen (4) zur Ausbildung von Portionen (P), insbesondere Würstchen (8), mit einer variablen Anzahl von Abdrehungen (8) je Portion (P) oderje Gruppe von Portionen (P) abzudrehen,
wobei die Vorrichtung (6) eine Steuerungseinrichtung (10) aufweist,
**dadurch gekennzeichnet, dass** die Steuerungseinrichtung (10) dazu eingerichtet ist, das Verfahren nach einem der Ansprüche 1 bis 7 auszuführen.

9. System (2) zum Befüllen schlauchförmiger Hüllen (4), mit
- einer Füllmaschine (14) zum Bereitstellen einer pastösen Masse,
- einer Vorrichtung zum Abdrehen (6) der gefüllten schlauchförmigen Hüllen (4), und
- einer Portioniervorrichtung (26) zur Ausbildung von Würstchen-Portionen (8),
**dadurch gekennzeichnet, dass** die Vorrichtung (6) nach Anspruch 8 ausgebildet ist.

## Claims

1. Method for twist linking tubular casings (4), comprising:
- twisting a tubular casing (4) such that the number of twists (R) per group of portions (P) is varied during the processing of a tubular casing (4),
wherein the number of twists (R) per group of portions (P) is varied in such a way that a first sequence of twist operations (S1) is performed with a first number of twists (R1) and a second sequence of twist operations (S2) is performed with a second number of twists (R2),
**characterized in that** the first sequence (S1) runs immediately after the processing of a tubular casing (4) begins, followed by the second sequence (S2) and when the processing of a tubular casing (4) ends, the first sequence (S1) runs again,
wherein the first sequence (S1) comprises a higher number of twists than the second sequence (S2).

2. Method according to claim 1, **characterized in that** the number of twists (R1) in the first sequence (S1) is 0.5 twists to 15 twists, in particular 1.5 to 3.5 twists.

3. Method according to one of the preceding claims, **characterized in that** the number of twists (R2) in the second sequence (S2) is 0.5 twists to 15 twists, in particular 1.5 to 3.5 twists.

4. Method according to one of the preceding claims, **characterized in that**, in relation to the total number of portions (P) in a tubular casing (4), the first sequence (S1) runs during the processing of the first and/or last 1% to 15% of the portions, in particular 5% of the portions (P).

5. Method according to one of the preceding claims, **characterized in that** the first sequence (S1) runs for the first and/or last 5 to 15, in particular 10 portions (P).

6. Method according to one of the preceding claims, **characterized in that** a transition region (U) in which the number of twists (R) transitions linearly or non-linearly from the number of twists (R1, R2) in the first sequence (S1, S2) bordering the transition region (U) to the number of twists (R1, R2) in the second sequence (S1, S2) bordering the transition region (U) is arranged between two sequences (S1, S2).

7. Method according to one of the preceding claims, further comprising:
- defining by means of a user interface (12) a series of twisting sequences (S1, S2) and/or the number of twists (R1, R2) within the sequences (S1, S2).

8. Apparatus (6) for twist linking tubular casings (4), which is configured to twist the tubular casings (4) to form portions (P), in particular sausages (8), having a variable number of twists (8) per portion (P) or per group of portions (P),
wherein the apparatus (6) comprises a control unit (10)
**characterized in that** the control unit (10) is configured to perform the method according to one of the claims 1 to 7.

9. A system (2) for stuffing tubular casings (4), comprising:
- a stuffing machine (14) for providing a pasty mass,
- an apparatus for twist linking (6) the stuffed tubular casings (4), and
- a portioning device (26) for forming sausage portions (8),
**characterized in that** the apparatus (6) is designed according to claim 8.

## Revendications

1. Procédé de détachement par torsion de manchons tubulaires (4), avec l'étape :
- de détachement par torsion d'un manchon tubulaire (4) de telle manière que le nombre de torsions (R) par groupe de portions (P) pendant le traitement d'un manchon tubulaire (4) varie,
dans lequel le nombre des torsions (R) par groupe de portions (P) varie de telle manière qu'une première séquence d'opérations de détachement par torsion (51) est effectuée avec un premier nombre de torsions (R1) et une deuxième séquence d'opérations de détachement par torsion (S2) est effectuée avec un deuxième nombre de torsions (R2),
**caractérisé en ce que**, directement après le début du traitement d'un manchon tubulaire (4), la première séquence (51) se déroule, puis la deuxième séquence (S2) et, à la fin du traitement d'un manchon tubulaire (4), la première séquence (51) se déroule à nouveau,
dans lequel la première séquence (51) contient un nombre de torsions plus élevé que la deuxième séquence (S2).

2. Procédé selon la revendication 1,
**caractérisé en ce que** le nombre des torsions (R1) dans la première séquence (51) va de 0,5 torsion à 15 torsions, en particulier de 1,5 à 3,5 torsions.

3. Procédé selon l'une quelconque des revendications précédentes,
**caractérisé en ce que** le nombre des torsions (R2) dans la deuxième séquence (S2) va de 0,5 torsion à 15 torsions, en particulier de 1,5 à 3,5 torsions.

4. Procédé selon l'une quelconque des revendications précédentes,
**caractérisé en ce que**, par rapport au nombre total de portions (P) d'un manchon tubulaire (4), la première séquence (51) se déroule lors du traitement des premiers et/ou des derniers 1 % à 15 %, en particulier des 5 % des portions (P).

5. Procédé selon l'une quelconque des revendications précédentes,
**caractérisé en ce que** la première séquence se déroule pour les premières et/ou dernières 5 à 15, en particulier 10 portions (P).

6. Procédé selon l'une quelconque des revendications précédentes,
**caractérisé en ce qu'**est disposée entre deux séquences (S1, S2) une zone de transition (U), dans laquelle le nombre des torsions (R) passe de manière linéaire ou de manière non linéaire du nombre des torsions (R1, R2) dans la première séquence (S1, S2) jouxtant la zone de transition (U) au nombre des torsions (R1, R2) dans la deuxième séquence (S1, S2) jouxtant la zone de transition (U).

7. Procédé selon l'une quelconque des revendications précédentes, dans lequel le procédé présente l'étape :
- de définition d'une suite des séquences de torsions (S1, S2) et/ou du nombre des torsions (R1, R2) à l'intérieur des séquences (S1, S2) au moyen d'une interface utilisateur (12).

8. Dispositif (6) destiné à détacher par torsion des manchons tubulaires (4), lequel est mis au point pour détacher par torsion les manchons tubulaires (4) pour réaliser des portions (P), en particulier des saucisses (8), avec un nombre variable de torsions (8) par portion (P) ou par groupe de portions (P),
dans lequel le dispositif (6) présente un système de commande (10),
**caractérisé en ce que** le système de commande (10) est mis au point pour exécuter le procédé selon l'une quelconque des revendications 1 à 7.

9. Système (2) de remplissage de manchons tubulaires (4), avec
- une machine de remplissage (14) destinée à fournir une masse pâteuse,
- un dispositif destiné à détacher par torsion (6) les manchons tubulaires (4) remplis, et
- un dispositif de portionnement (26) destiné à réaliser des portions de saucisse (8),
**caractérisé en ce que** le dispositif (6) est réalisé selon la revendication 8.
